(19) **Europäisches Patentamt / European Patent Office / Office européen des brevets**

(11) **EP 4 691 612 A1**

(12) # EUROPEAN PATENT APPLICATION

(43) Date of publication:
**11.02.2026 Bulletin 2026/07**

(21) Application number: **24192995.9**

(22) Date of filing: **06.08.2024**

(51) International Patent Classification (IPC):
**B01D 61/44** (2006.01)      **B01D 65/02** (2006.01)
**C02F 1/469** (2023.01)      **C02F 103/38** (2006.01)
**C02F 103/08** (2006.01)

(52) Cooperative Patent Classification (CPC):
**B01D 61/44; B01D 61/445; B01D 65/02;**
**C02F 1/4674; C02F 1/4693; C25B 1/26;**
B01D 2313/902; B01D 2321/162; B01D 2321/164;
B01D 2321/44; C02F 2103/08; C02F 2201/4618

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Bosaq BV**
**9800 Deinze (BE)**

(72) Inventors:
• **BOSSAER, Jacob**
  **9500 Geraardsbergen (BE)**

• **DERBOVEN, Pieter**
  **9940 Evergem (BE)**
• **DESLOOVER, Joachim**
  **9860 Oosterzele (BE)**
• **MAES, Wardje**
  **2870 Puurs-Sint-Amands (BE)**
• **WARDENIER, Niels**
  **8810 Lichtervelde (BE)**

(74) Representative: **Ipsilon Belgium**
**Bellevue 5/501**
**9050 Gent-Ledeberg (BE)**

(54) **BIPOLAR MEMBRANE ELECTRODIALYSIS DEVICE FOR GENERATING CLEANING SOLUTIONS**

(57) Example embodiments relate to a bipolar membrane electrodialysis device (100) for generating a hydrochloric acid solution (133), an alkali hydroxide solution (132, 134), and free chlorine (131) from a chloride salt solution feed (135, 138) and a water feed (136, 137, 139); the bipolar membrane electrodialysis device comprising an anode compartment (101) comprising an anode (106); a cathode compartment (105) comprising a cathode (107); and intermediate compartments (102 - 104) separated by a stack of membranes (110, 121, 122, 123) arranged in series between the anode compartment and the cathode compartment. The stack of membranes comprises an outer cation-exchange membrane (110), and one or more repeating units (120) respectively comprising a sequence of a bipolar membrane (121), an anion-exchange membrane (122), and a cation-exchange membrane (123); and wherein the bipolar membrane electrodialysis device is configured to: receive the chloride salt solution feed (135, 138) within the anode compartment (101) and within the intermediate compartment (104) between the anion-exchange membrane and the cation-exchange membrane of the one or more repeating units (120); and receive the water feed (136, 137, 139) within the other intermediate compartments (102, 103) and the cathode compartment (105).

Fig. 1

# Description

## Field of the Invention

The present invention generally relates to a bipolar membrane electrodialysis device and a process for generating a hydrochloric acid solution, an alkali hydroxide solution, and free chlorine from benign starting solutions.

## Background of the Invention

A variety of chemicals are typically used in chemical cleaning of, for example, filters, surfaces, or filtration membranes. The chemicals may form distinct cleaning solution compositions that remove a specific form of fouling. Typical cleaning solutions for chemical cleaning include a strong acidic solution such as hydrochloric acid (HCl) to remove inorganic scale, strong bases such as sodium hydroxide (NaOH) to dissolve organic fouling, and an active form of chlorine that is capable of disinfection, typically referred to as free chlorine. As most of the aforementioned contaminations are simultaneously present, in particular in filtration membranes, it is generally necessary to use a combination of these cleaning solutions or use them successively.

These cleaning solutions may be produced on a large industrial scale, mostly in concentrated form, after which they are transported to the user to be stored in large vessels until they are needed. However, transporting and storing concentrated cleaning solutions brings potential safety hazards with it. This is especially not ideal for decentralized applications such as decentralized water treatment systems which are located in remote areas where frequent handling and storage of dangerous concentrated chemicals should be avoided. Additionally, regulations on storing concentrated cleaning solutions are becoming progressively strict by requiring an extensive environmental permit or by prohibiting their storage entirely unless the proper technical measures towards potential leakages and safety are taken, which is not always possible at each site.

To this end, cleaning solutions may be generated from a benign starting solution on-site when they are needed, e.g. by electrolysis or electrodialysis. It however remains a challenge to produce the variety of cleaning solutions needed for chemically cleaning the different forms of contamination in a single device without requiring transport, storage, or handling of concentrated chemicals.

## Summary of the Invention

It is an object of the present invention, amongst others, to solve or alleviate the above identified problems and challenges by providing a bipolar membrane electrodialysis device for generating a variety of cleaning solutions needed for chemically cleaning different forms of contamination in a single device from benign starting solutions.

According to a first aspect, this object is achieved by a bipolar membrane electrodialysis device for generating a hydrochloric acid solution, an alkali hydroxide solution, and free chlorine from a chloride salt solution feed and a water feed. The bipolar membrane electrodialysis device comprising: an anode compartment comprising an anode; a cathode compartment comprising a cathode; and intermediate compartments separated by a stack of membranes arranged in series between the anode compartment and the cathode compartment. The stack of membranes comprises an outer cation-exchange membrane, and one or more repeating units respectively comprising a sequence of a bipolar membrane, an anion-exchange membrane, and a cation-exchange membrane. The bipolar membrane electrodialysis device is configured to receive the chloride salt solution feed within the anode compartment and within the intermediate compartment between the anion-exchange membrane and the cation-exchange membrane of the one or more repeating units; and receive the water feed within the other intermediate compartments and the cathode compartment.

The chloride salt solution feed comprises chloride ions, $Cl^-$, and one or more alkali metal cations, $M_a^+$. The one or more alkali metal cations may be Lithium ions, Sodium ions, Potassium ions, Rubidium ions, Caesium ions, and Francium ions. The alkali hydroxide solution generated by the bipolar membrane electrodialysis device comprises hydroxide ions, $OH^-$, and the one or more alkali metal cations $M_a^+$ of the chloride salt solution feed. The free chlorine generated by the bipolar membrane electrodialysis device refers to an active form of chlorine that is capable of disinfection such as, for example, chlorine gas, $Cl_2$; hypochlorous acid, $HOCl$; or hypochlorite ions, $OCl^-$.

The bipolar membrane electrodialysis device comprises intermediate compartments in between the anode compartment and the cathode compartment. The intermediate compartments are separated from the anode compartment, the cathode compartment, and one another by a stack of membranes arranged in series. The stack of membranes comprises an outer cation-exchange membrane that delimits the anode compartment, and one or more repeating units. A repeating unit refers to the structural and functional set of membranes that may be repeatedly provided between the electrodes of an electrodialysis device. The number of repeating units may determine the production capacity of the bipolar membrane electrodialysis device. Each respective repeating unit comprises an ordered sequence of a bipolar membrane, an anion-exchange membrane, and a cation-exchange membrane along the direction from the cathode compartment to the anode compartment.

The cation-exchange membranes and the anion-exchange membranes are selective for cation and anion transfer, respectively, when subject to an electric field. In other words, cations within a compartment can migrate through a cation-exchange membrane to an adjacent compartment in the direction of the cathode when subject to an electric field. On the other hand, anions within a compartment can migrate through an anion-exchange membrane to an adjacent compartment in the direction of the anode when subject to an electric field. Herein, the cathode refers to a negatively charged electrode where reduction occurs, and the anode refers to a positively charged electrode where oxidation occurs. The bipolar membrane typically comprises a cation-exchange and an anion-exchange membrane that dissociate water into hydrogen ions, $H^+$, and hydroxide ions $OH^-$ when subject to an electric field.

Feeding the chloride salt solution feed within the anode compartment allows generating free chlorine by electrolysis, i.e. oxidation, of the chlorine ions within the chloride salt solution. Feeding the chloride salt solution feed within the intermediate compartment between the anion-exchange membrane and the cation-exchange membrane of the one or more repeating units, feeding water within the other intermediate compartments, and feeding water within the cathode compartment results in ion transfers between adjacent compartments, dissociation of water, and electrolysis of water so as to generate the alkali hydroxide solution and the hydrochloric acid solution.

The bipolar membrane electrodialysis device thus allows, in a single device, generating the different cleaning solutions needed for chemical cleaning from benign starting solutions when they are needed. It is an advantage that the bipolar membrane electrodialysis device is relatively compact and lightweight. This has the further advantage that the bipolar membrane electrolysis device allows generating cleaning solutions in-situ without adding substantial volume or weight to, for example, a decentralized water treatment system, which increases the difficulty of transporting and installing such a system in remote areas. It is a further advantage that no transport, storage, or handling of concentrated chemicals is needed. It is a further advantage that the discharge of chemicals to the environment is limited as the generation of the cleaning solutions can be matched to the needed volume for cleaning.

According to an example embodiment, the bipolar membrane electrodialysis device may further be configured to generate the hydrochloric acid solution within the intermediate compartment between the bipolar membrane and the anion-exchange membrane of the one or more repeating units when subject to an electric field between the anode and the cathode.

The electric field can, for example, be established by applying an electric potential between the cathode within the cathode compartment and the anode within the anode compartment. Hydrogen ions and chlorine ions are obtained within the intermediate compartment between the bipolar membrane and the anion-exchange membrane of the one or more repeating units by, respectively, the dissociation of water and the migration of chlorine ions from the adjacent intermediate compartment that receives the chloride salt solution feed. These hydrogen ions and chlorine ions react to form hydrochloric acid, *HCl*, within the intermediate compartment between the bipolar membrane and the anion-exchange membrane of the one or more repeating units.

According to an example embodiment, the bipolar membrane electrodialysis device may further be configured to, when subject to an electric field between the anode and the cathode:

- generate the alkali hydroxide solution within the intermediate compartment between the outer cation-exchange membrane and the bipolar membrane;
- generate the alkali hydroxide solution within the cathode compartment; and
- if the bipolar membrane electrodialysis device comprises at least two repeating units, generate the alkali hydroxide solution within the intermediate compartment between the respective repeating units.

Alkali metal cations and hydroxide ions are obtained within the intermediate compartment between the outer cation-exchange membrane and the bipolar membrane by, respectively, migration of alkali metal cations through the outer cation-exchange membrane and dissociation of water at the bipolar membrane. These alkali metal cations and hydroxide ions react to form alkali hydroxide within the intermediate compartment between the outer cation-exchange membrane and the bipolar membrane.

Alkali hydroxide may be formed from alkali metal cations and hydroxide ions obtained within the intermediate compartment between respective repeating units by, respectively, migration of alkali metal cations through the cation-exchange membrane of a first repeating unit and dissociation of water into hydroxide ions by the bipolar membrane of the subsequent repeating unit.

The water feed received within the cathode compartment is electrolyzed at the cathode, i.e. reduced, to form hydroxide ions. Alkali metal cations are obtained within the cathode compartment by migration of alkali metal cations through the cation-exchange membrane of the repeating unit adjacent to the cathode compartment. These alkali metal cations and hydroxide ions react to form alkali hydroxide within the cathode compartment.

According to an example embodiment, the bipolar membrane electrodialysis device may further be configured to generate the free chlorine within the anode compartment when subject to an electric field between the anode and the cathode.

The chloride ions within the chloride salt solution feed received within the anode compartment are electrolyzed at the anode, i.e. oxidated, to form chlorine.

According to an example embodiment, the bipolar membrane electrodialysis device may further be configured to recirculate a solution generated within a compartment over said compartment until the generated solution has a desired concentration.

The compartment over which a generated solution is recirculated may be the anode compartment, one or more of the intermediate compartments, and/or the cathode compartment. For example, the hydrochloric acid solution generated within the intermediate compartment between the bipolar membrane and the anion-exchange membrane may be recirculated to feed the hydrochloric acid solution back into said intermediate compartment. In doing so, the concentration of the hydrochloric acid solution gradually increases as more and more hydrochloric acid is formed within the same solution. Thus, recirculating the generated solution over the compartment wherein it is generated allows increasing the concentration of the generated solution. This has the further advantage that the concentration of the cleaning solutions can be controlled.

According to an example embodiment, the bipolar membrane electrodialysis device may further be configured to extract the generated free chlorine from the anode compartment as a chlorine gas.

This can, for example, be achieved by a venturi tube segment that uses the Venturi effect to create a pressure gradient that allows extracting the generated chlorine gas from the chloride salt solution within the anode compartment. The remaining chloride salt solution may further be recirculated to the anode compartment, e.g. for further electrolysis at the anode. This allows efficient, safe, and cost-effective extraction of generated free chlorine and yields minimal unwanted chlorate formation.

According to an example embodiment, the bipolar membrane electrodialysis device may further be configured to generate an alkali hypochlorite solution by dissolving the chlorine gas within a water stream comprising at least a portion of the generated alkali hydroxide solution.

In other words, the water stream may be a portion of the generated alkali hydroxide solution that is diluted with water. The alkali hypochlorite solution comprises hypochlorite ions, $ClO^-$, dissolved in water along with the one or more alkali metal cations of the generated alkali hydroxide solution. The alkali hypochlorite solution may, for example, be $NaOCl$ generated by dissolving the extracted chlorine gas within the water stream, i.e. a $NaOH$ solution generated within a compartment of the bipolar membrane electrodialysis device that is diluted with water. The alkali hypochlorite solution may, for example, be used to clean, disinfect, bleach, or sanitize a filtration membrane, a filter, or a surface.

According to an example embodiment, the bipolar membrane electrodialysis device may further be configured to extract the generated free chlorine from the anode compartment as a liquid free chlorine solution.

The chlorine generated within the anode compartment swiftly reacts with the present water to form a liquid free chlorine solution comprising hypochlorous acid, $HOCl$, and hydrogen chloride, $HCl$. Alternatively, a liquid free chlorine solution comprising hypochlorite, $ClO^-$, and hydrogen chloride, $HCl$, may be formed. The predominant form of free chlorine within the liquid free chlorine solution may depend on the pH of the solution.

According to an example embodiment, the bipolar membrane electrodialysis device may further be configured to generate an alkali hypochlorite solution by mixing the liquid free chloride solution with at least a portion of the generated alkali hydroxide solution.

According to an example embodiment, the alkali hypochlorite solution may have a concentration between around 1 ppm to around 2000 ppm.

According to an example embodiment, the hydrochloric acid solution may have a concentration between around 0.1M and around 5.0M; and wherein the alkali hydroxide solution has a concentration between around 0.1M and around 5.0M.

According to an example embodiment, the outer cation-exchange membrane may be resistant to free chlorine.

This allows avoiding gradual degradation of the outer cation-exchange membrane by exposure to the generated free chlorine within the anode compartment. This has the further advantage that the lifetime of the cation-exchange membrane is extended.

According to an example embodiment, the chloride salt solution feed may be a saturated brine solution, a diluted chloride salt solution, seawater, or a reverse osmosis concentrate.

Reverse osmosis concentrate, also referred to as reverse osmosis reject or brine, is the portion of the feed water that does not pass through the semi-permeable membrane during reverse osmosis of water. It thus refers to a byproduct of the reverse osmosis of water comprising concentrated contaminants, salts, and impurities present in the original feed water. This concentrate is preferably softened to protect the membranes of the bipolar membrane electrodialysis device.

According to an example embodiment, the bipolar membrane electrodialysis device may further be reconfigurable to generate the hydrochloric acid solution and the alkali hydroxide solution without generating free chlorine by receiving a feed substantially free of chloride within the anode compartment in stead of the chloride salt solution feed.

The bipolar membrane electrodialysis device may thus be operable in two distinct modes: a first generation mode wherein a hydrochloric acid solution, an alkali hydroxide solution, and free chlorine are generated; and a second generation mode wherein only the hydrochloric acid solution and the alkali hydroxide solution are generated. Reconfiguring the bipolar membrane electrodialysis device between the first and second generation mode may be achieved by adjusting the feed provided to the anode compartment, i.e. by adjusting the feed configuration of the bipolar membrane electrodialysis device. The generation of free chlorine may thus be enabled by providing a feed comprising chloride and disabled by providing a feed substantially free of chloride to the anode compartment.

This is an advantage as some devices, e.g. reverse osmosis membranes, only require an alkali hydroxide solution and a hydrochloric acid solution for cleaning, making the generation of free chlorine an unwanted side reaction. In absence of such control over the generation of free chlorine, unnecessary or unneeded chlorine would have to be stored, which is becoming increasingly difficult due to environmental regulations and policies. It is thus a further advantage that storing free chlorine can be avoided. It is a further advantage that the switch between the generation modes can easily be implemented, e.g. by means of manual or automatic valves. Enabling and disabling the generation of free chlorine is a further advantage as filtration systems typically comprise filtration membranes requiring cleaning without free chlorine, e.g. reverse osmosis membranes, and filtration membranes requiring cleaning with free chlorine, e.g. microfiltration membranes, ultrafiltration membranes, and nanofiltration membranes. This allows using the bipolar membrane electrodialysis device in a variety of filtration systems as it is flexible and multipurpose.

According to an example embodiment, the feed substantially free of chloride comprises a recirculated feed of the generated alkali hydroxide solution.

Switching from the first generation mode to the second generation mode may thus be achieved by recirculating generated alkali hydroxide solution to the anode compartment. The generated alkali hydroxide solution may be recirculated to the anode compartment from the cathode compartment, the intermediate compartment between the outer cation-exchange membrane and the bipolar membrane, and/or the intermediate compartments between successive repeating units if the bipolar membrane electrodialysis device comprises at least two repeating units. In doing so, no free chlorine is generated within the anode compartment as substantially no chloride ions are present within the anode compartment that can be electrolyzed to chlorine gas at the anode. Advantageously, the adjacent intermediate compartment between the outer cation-exchange membrane and the bipolar membrane is still provided with the necessary alkali metal cations to keep generating the alkali hydroxide solution.

According to a second aspect, the invention relates to a process for generating a hydrochloric acid solution, an alkali hydroxide solution, and free chlorine from a chloride salt solution feed and a water feed; the process comprising:

- applying an electrical field between an anode within an anode compartment and a cathode within a cathode compartment;
- feeding the chloride salt solution feed within the anode compartment;
- feeding the chloride salt solution feed within an intermediate compartment between an anion-exchange membrane and a cation-exchange membrane of one or more repeating units; and
- feeding the water feed within other intermediate compartments and the cathode compartment;

wherein the intermediate compartments are separated by a stack of membranes arranged in series between the anode compartment and the cathode compartment; and wherein the stack of membranes comprises an outer cation-exchange membrane, and one or more repeating units respectively comprising a sequence of a bipolar membrane, an anion-exchange membrane, and a cation-exchange membrane.

According to an example embodiment, the process may further comprise feeding a feed substantially free of chloride within the anode compartment in stead of the chloride salt solution feed while the generation of free chlorine is to be disabled.

## Brief Description of the Drawings

Fig. 1 shows a bipolar membrane electrodialysis device for generating hydrochloric acid solution, an alkali hydroxide solution, and free chlorine according to embodiments;

Fig. 2 shows a reconfiguration of the bipolar membrane electrodialysis device to a second generation mode for only generating hydrochloric acid solution and alkali hydroxide solution without generating free chlorine, according to embodiments;

Fig. 3 shows an example embodiment of a bipolar membrane electrodialysis device configured to recirculate the respective solutions generated within the respective compartments over these respective compartments;

Fig. 4 shows experimental validation results of the generated cleaning solutions by a bipolar membrane electrodialysis device according to embodiments; and

Fig. 5 shows an example of a decentralized water treatment unit 500 for purifying untreated water to purified water for human consumption comprising the bipolar membrane electrodialysis device.

## Detailed Description of Embodiment(s)

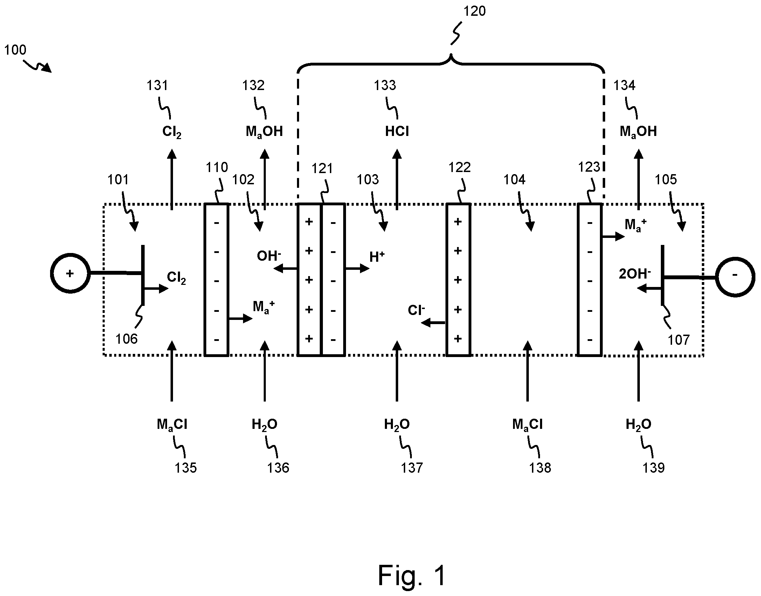

Fig. 1 shows a bipolar membrane electrodialysis device 100 for generating a hydrochloric acid solution 133, an alkali hydroxide solution 132, 134, and free chlorine 131 according to embodiments. The device 100 comprises an anode 106 provided within an anode compartment 101, and a cathode 107 provided within a cathode compartment 105. Herein, the cathode 107 refers to a negatively charged electrode where reduction occurs, and the anode 106 refers to a positively charged electrode where oxidation occurs. At least a portion of the enclosure of the anode compartment 101 and the cathode compartment 105 is provided by respective cation-exchange membranes 110, 123. The cation-exchange membrane 110 delimiting the anode compartment is further referred to as the outer cation-exchange membrane 110.

The bipolar membrane electrodialysis device 100 further comprises intermediate compartments 102, 103, 104 arranged in between the anode compartment 101 and the cathode compartment 105. The intermediate compartments 102, 103, 104 are separated from the anode compartment 101, the cathode compartment 105, and one another by a stack of membranes 110, 121, 122, 123 arranged in series between the anode compartment and the cathode compartment. The stack of membranes comprises an ordered sequence of the outer cation-exchange membrane 110 that delimits the anode compartment 101, a bipolar membrane 121, an anion-exchange membrane 122, and the cation-exchange membrane 123 that delimits the cathode compartment 105. The bipolar membrane 121, the anion-exchange membrane 122, and the cation-exchange membrane 123 form a repeating unit 120. A repeating unit 120 refers to the structural and functional set of membranes 121, 122, 123 that may be repeatedly provided a number of times between the electrodes 106, 107 of the electrodialysis device 100. The number of repeating units 120 may determine the production capacity of the bipolar membrane electrodialysis device 100. The device 100 may thus comprise one or more repeating units 120 in series between the electrodes 106, 107.

The cation-exchange membranes 110, 123 and the anion-exchange membranes 122 are selective for cation and anion transfer, respectively, when subject to an electric field. In other words, cations within a compartment can migrate through a cation-exchange membrane to an adjacent compartment in the direction of the cathode 107 when subject to an electric field. Cations can not migrate through an anion-exchange membrane. On the other hand, anions within a compartment can migrate through an anion-exchange membrane to an adjacent compartment in the direction of the anode 106 when subject to an electric field. Anions can not migrate through a cation-exchange membrane. The bipolar membrane 121 typically comprises both a cation-exchange and an anion-exchange membrane. The bipolar membrane 121 allows dissociating water into hydrogen ions, $H^+$, and hydroxide ions $OH^-$ when subject to an electric field.

The bipolar membrane electrodialysis device 100 is configured to receive a chloride salt solution feed 135 within the anode compartment 101 and a chloride salt solution feed 138 within the intermediate compartment 104 between the anion-exchange membrane 122 and the cation-exchange membrane 123. It will be apparent that, if the device 100 comprises a plurality of repeating units 120, the device 100 is configured to receive the chloride salt solution feed 138 within each of the intermediate compartments 104 of the respective repeating units 120.

The chloride salt solution feed 135, 138 comprises chloride ions, $Cl^-$, and one or more alkali metal cations, $M_a^+$, dissolved in water. The one or more alkali metal cations may be Lithium ions, Sodium ions, Potassium ions, Rubidium ions, Caesium ions, and Francium ions. The chloride salt solution may, for example, comprise sodium chloride, $NaCl$, potassium chloride, $KCl$, lithium chloride, $LiCl$, or a combination thereof. The chloride salt solution feeds 135, 138 may be a saturated brine solution, a diluted chloride salt solution, seawater, or a reverse osmosis concentrate. Reverse osmosis concentrate, also referred to as reverse osmosis reject or brine, is the portion of the feed water that does not pass through the semi-permeable membrane during reverse osmosis of water. It thus refers to a byproduct of the reverse osmosis of water comprising concentrated contaminants, salts, and impurities present in the original feed water. This concentrate is preferably softened to protect the membranes 110, 121, 122, 123 of the bipolar membrane electrodialysis device 100.

The chloride ions, $Cl^-$ within the chloride salt solution feed 135 that is received within the anode compartment 101 are electrolyzed at the anode 106 to form free chlorine 131, i.e. by a reduction of the chloride ions. Device 100 is thus configured to generate free chlorine 131 within the anode compartment 101 when subject to an electric field between the anode 106 and cathode 107. The electric field can, for example, be established by applying an electric potential between the electrodes 106, 107. The free chlorine 131 generated by the bipolar membrane electrodialysis device 100 refers to an active form of chlorine that is capable of disinfection and cleaning, sometimes also referred to as an oxidizing agent, e.g. chlorine gas, $Cl_2$; hypochlorous acid, $HOCl$; or hypochlorite ions, $OCl^-$.

The outer cation-exchange membrane 110 may further be substantially resistant to free chlorine. This allows avoiding gradual degradation of the outer cation-exchange membrane 110 by exposure to the generated free chlorine within the anode compartment 101. This has the further advantage that the lifetime of the cation-exchange membrane 110 is extended, thereby requiring less maintenance.

The one or more alkali metal cations, $M_a^+$, of the chloride salt solution feed 135 within the anode compartment 101 migrate through the outer cation-exchange membrane 110 to the adjacent intermediate compartment 102 under the influence of the electric field, i.e. in the direction of the cathode 107.

The device 100 is further configured to receive a water feed 136 within this intermediate compartment 102 between the outer cation-exchange membrane 110 and the bipolar membrane 121. The water feed 136 may, for example, be demineralized water or softened water. Subject to an electric field, the water molecules are disassociated into hydrogen ions, $H^+$, and hydroxide ions $OH^-$ at the bipolar junction of the bipolar membrane 121. As a result, hydroxide ions are obtained within intermediate compartment 102. These hydroxide ions react with the migrated alkali metal cations $M_a^+$ to form an alkali hydroxide $M_aOH.$ As such, an alkali hydroxide solution 132 is generated within intermediate compartment 102. The alkali hydroxide solution 132 generated by the bipolar membrane electrodialysis device 100 thus comprises hydroxide ions, $OH^-$, and the one or more alkali metal cations $M_a^+$ of the chloride salt solution feed 135. It will thus be apparent that the composition of the generated alkali hydroxide solution 132 depends on the selected chloride salt solution feed 135. Alkali hydroxide solution 132 may, for example, be sodium hydroxide, $NaOH,$ or potassium hydroxide, $KOH.$

The dissociation of water by the bipolar membrane 121 further results in obtaining hydrogen ions $H^+$ within intermediate compartment 103 between the bipolar membrane 121 and the anion-exchange membrane 122. The device 100 is further configured to receive a water feed 137 within this intermediate compartment 103.

The device is further configured to receive a chloride salt solution feed 138 within the adjacent intermediate compartment 104, i.e. the compartment between the anion-exchange membrane 122 and cation-exchange membrane 123. The chloride ions, $Cl^-$, of the chloride salt solution feed 138 within intermediate compartment 104 migrate through the anion-exchange membrane 122 to the adjacent intermediate compartment 103 under the influence of the electric field, i.e. in the direction of the anode 106. Within intermediate compartment 103, the migrated chloride ions react with the hydrogen ions obtained by the dissociation of water to form hydrochloric acid, $HCl.$ As such, a hydrochloric acid solution 133 is generated within intermediate compartment 103.

The one or more alkali metal cations, $M_a^+$, of the chloride salt solution feed 138 within intermediate compartment 104 migrate through the cation-exchange membrane 123 to the adjacent cathode compartment 105 under the influence of the electric field, i.e. in the direction of the cathode 107. It will be apparent that the concentration of chloride salt in chloride salt solution feed 138 may be sufficient to supply alkali metal cations and chloride ions to the adjacent compartments without substantially depleting the chloride salt of the chloride salt solution within intermediate compartment 104.

The device is further configured to receive a water feed 139 within the cathode compartment 105. The water molecules are electrolyzed at the cathode 107 to form hydroxide ions, i.e. by a reduction of the water molecules. Within the cathode compartment, the migrated alkali metal cations, $M_a^+$, react with the hydroxide ions obtained by the electrolysis of water to form an alkali hydroxide, $M_aOH.$ Device 100 is thus configured to generate an alkali hydroxide solution 134 within the cathode compartment 105 when subject to an electric field between the anode 106 and cathode 107.

Chloride salt solution feed 135 and chloride salt solution feed 138 may have substantially the same composition. Alternatively, the composition of the chloride salt solution feeds 135, 138 may be different. For example, chloride salt solution feed 135 may comprise sodium chloride, $NaCl,$ and chloride salt solution feed 138 may comprise potassium chloride, $KCl.$ In doing so, two different alkali hydroxide solutions 132, 134 can be generated by device 100. In the aforementioned example, solution 132 would be a sodium hydroxide solution, $NaOH,$ and solution 134 would be a potassium hydroxide solution, $KOH.$

The bipolar membrane electrodialysis device 100 thus allows, in a single device, generating the different cleaning solutions 131 - 134 needed for chemical cleaning from benign starting solutions 135 - 139 only when they are needed. It is an advantage that the bipolar membrane electrodialysis device 100 is relatively compact and lightweight. This has the further advantage that the bipolar membrane electrolysis device 100 allows generating cleaning solutions in-situ without adding substantial volume or weight to, for example, a decentralized water treatment system, which increases the difficulty of transporting and installing such a system in remote areas. It is a further advantage that no transport, storage, or handling of concentrated chemicals is needed. It is a further advantage that the discharge of chemicals to the environment is limited as the generation of the cleaning solutions can be matched to the needed volume for cleaning.

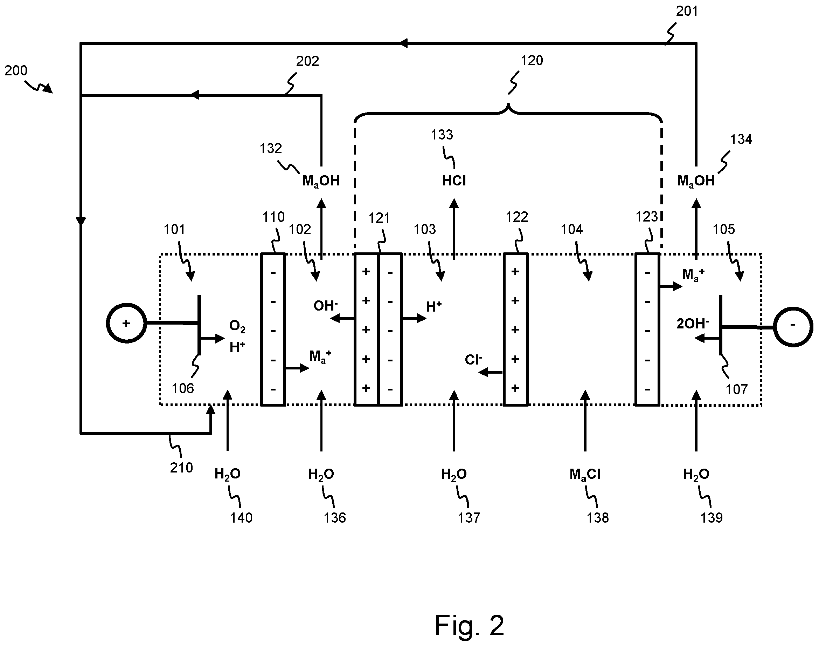

The bipolar membrane electrodialysis device 100 may further be reconfigurable to generate the hydrochloric acid solution 133 and the alkali hydroxide solution 132, 134 without generating free chlorine 131. The bipolar membrane electrodialysis device 100 may thus be operable in two distinct modes. During a first generation mode or configuration the device 100 generates a hydrochloric acid solution, an alkali hydroxide solution, and free chlorine, as illustrated in Fig. 1. Fig. 2 shows a second generation mode or configuration of the bipolar membrane electrodialysis device 200 during which the device 200 only generates the hydrochloric acid solution 133 and the alkali hydroxide solution 132, 134. In other words, by reconfiguring the device to the second generation mode, the generation of free chlorine can be supressed or avoided.

The device 200 may be reconfigured to the second generation mode by adjusting the feed 210 provided to the anode compartment 101. Instead of providing the chloride salt solution feed 135 to the anode compartment 101, a feed substantially free of chloride 140, 210 is provided to the anode compartment 101. The generation of free chlorine may thus be enabled by providing a feed comprising chloride and disabled by providing a feed substantially free of chloride to the anode compartment. The feed substantially free of chloride may include a water feed 140, e.g. softened or demineralized water.

Switching from the first generation mode, illustrated in Fig. 1, to the second generation mode, illustrated in Fig. 2, may be achieved by recirculating 201, 202 the generated alkali hydroxide solution 132, 134 to the anode compartment 101. In doing so, the formation of free chlorine at the anode 106 will stop as the solution within the anode compartment no longer comprises chloride ions. In stead, oxygen and hydrogen ions are formed at the anode. The latter reacts with the recirculated alkali hydroxide solution to form water molecules within the anode compartment 101. Advantageously, the adjacent intermediate compartment 102 is still provided with the necessary alkali metal cations to keep generating the alkali hydroxide solution 132.

It is an advantage that the generation of free chlorine can be controlled as some devices, e.g. reverse osmosis membranes, only require an alkali hydroxide solution 132, 134 and a hydrochloric acid solution 133 for cleaning, making the generation of free chlorine an unwanted side reaction. In absence of such control over the generation of free chlorine, unnecessary or unneeded chlorine would have to be stored, which is increasingly prohibited by environmental regulations and policies unless the proper technical measures towards potential leakages and safety are taken, which is not always possible at each site. It is thus a further advantage that storing free chlorine can be avoided. It is a further advantage that the switch between the generation modes can easily be implemented, e.g. by means of manual or automatic valves that redirect at least a portion of the generated alkali hydroxide solution 132, 134 to the anode compartment.

It will be apparent that the generated alkali hydroxide solution 132, 134 may be recirculated to the anode compartment 101 from any compartment that generates the alkali hydroxide solution, e.g. from the cathode compartment 105, intermediate compartment 102 between the outer cation-exchange membrane and the bipolar membrane, and/or the intermediate compartments between successive repeating units 120 if the bipolar membrane electrodialysis device 200 comprises at least two repeating units.

The bipolar membrane electrodialysis device 100, 200 may further be configured to recirculate a solution 131 - 134 generated within a compartment 101 - 105 over said compartment 101 - 105 until the generated solution 131 - 134 has a desired concentration. The compartment over which a generated solution is recirculated may be the anode compartment 101, one or more of the intermediate compartments 102 - 104, and/or the cathode compartment 105.

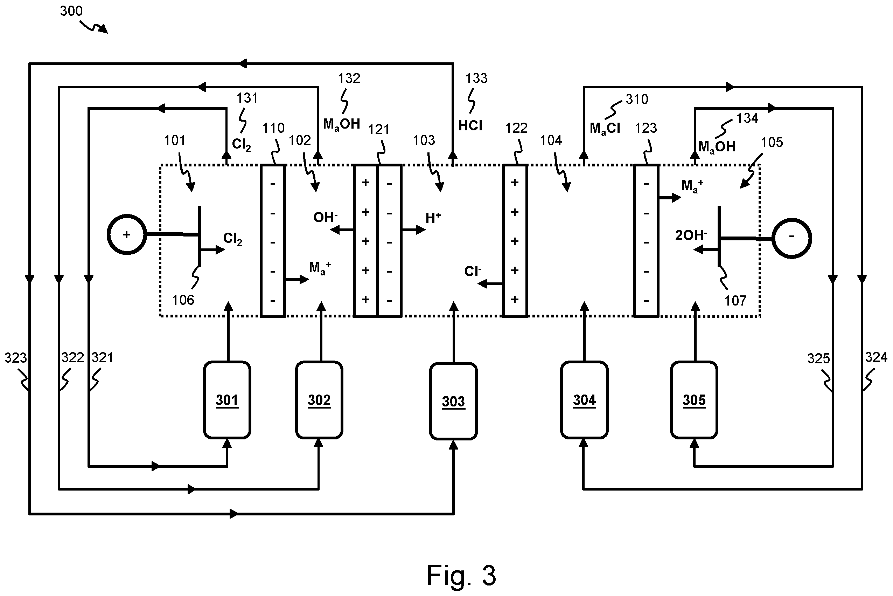

Fig. 3 shows an example embodiment of a bipolar membrane electrodialysis device 300 configured to recirculate the respective solutions 131, 132, 133, 310, 134 generated within the respective compartments 101, 102, 103, 104, 105 over these respective compartments. To this end, a plurality of storage tanks 301 - 305 may be provided that are connected to an inflow and an outflow of the respective compartments 101 - 105. Storage tank 301 and 304 may initially comprise the chloride salt solution feed. Storage tanks 302, 304, and 305 may initially comprise the water feed. Alternatively, a single storage tank may be provided for some or all of the storage tanks that comprise the same solution. For example, storage tanks 302 and 305 may be a single storage tank.

The chloride salt solution feed within storage tank 301 may be flowed through the anode compartment 101, thereby generating free chlorine at the cathode 106 and allowing alkali metal cations to migrate to intermediate compartment 102. In doing so, the concentration of the chloride salt within the salt solution feed decreases gradually. The chloride salt solution may be recirculated 321 over the storage tank and fed back into the anode compartment 101 until a desired amount or concentration of free chlorine is obtained.

The bipolar membrane electrodialysis device 300 may further be configured to extract the generated free chlorine 131 from the anode compartment as a chlorine gas. This can, for example, be achieved by a venturi tube segment that uses the Venturi effect to create a pressure gradient that allows extracting the generated chlorine gas from the chloride salt solution within the anode compartment, thereby allowing to extract chlorine gas and feeding the remaining chloride salt solution back into the anode compartment 101 for further electrolysis at the anode 106. This allows efficient, safe, and cost-effective extraction of generated free chlorine.

Alternatively, the bipolar membrane electrodialysis device 300 may further be configured to extract the generated free chlorine from the anode compartment as a liquid free chlorine solution. The chlorine generated within the anode compartment 101 swiftly reacts with the present water to form a liquid free chlorine solution comprising hypochlorous acid, $HOCl$, and hydrogen chloride, $HCl$. Alternatively, a liquid free chlorine solution comprising hypochlorite, $ClO^-$, and hydrogen chloride, $HCl$, may be formed. The predominant form of free chlorine within the liquid free chlorine solution may depend on the pH of the solution.

The bipolar membrane electrodialysis device 300 may further be configured to generate an alkali hypochlorite solution. If the free chlorine 131 is extracted as a gas, this may be achieved by dissolving the chlorine gas within a water stream comprising at least a portion of the generated alkali hydroxide solution 132, 134. Alternatively, if the free chlorine 131 is extracted as a liquid solution, this may be achieved by mixing the liquid free chloride solution with at least a portion of the generated alkali hydroxide solution 132, 134.

In doing so, the generated alkali hypochlorite solution comprises hypochlorite ions, $CIO^-$, dissolved in water along with the one or more alkali metal cations of the generated alkali hydroxide solution 132, 134. The alkali hypochlorite solution may, for example, be $NaOCl$ generated by dissolving or mixing the free chlorine 131 within a $NaOH$ solution generated within one or more compartments 132, 134 of the bipolar membrane electrodialysis device 300. The alkali hypochlorite solution may, for example, be used to disinfect, bleach, or sanitize a filtration membrane, a filter, or a surface.

The water feed within storage tanks 302 and 305 may be flowed through intermediate compartments 102 and 105 respectively. In doing so, alkali hydroxide solution is generated within the compartments 102, 105. This generated solution is recirculated 322, 325 over the respective storage tanks 302, 305 and the compartments 102, 105. As such, the concentration of alkali hydroxide within the solution stored within the storage tanks 302, 305 gradually increases over time. The solution may be recirculated until a desired concentration is reached. The desired concentration of the alkali hydroxide solution may be between around 0.01M and around 5.0M.

The water feed within storage tank 303 may be flowed through intermediate compartment 103 and recirculated 323. As hydrochloric acid is gradually formed within the intermediate compartment 103, the hydrochloric acid solution 133 is generated and the concentration of hydrochloric acid gradually increases. The solution may be recirculated until a desired concentration is reached. The desired concentration of the alkali hydrochloric acid solution may be between around 0.01M and around 5.0M.

The chloride salt solution feed within storage tank 304 may be flowed through the intermediate compartment 104 and recirculated 324, thereby gradually decreasing in chloride salt concentration as the chloride ions and alkali metal cations migrate to the adjacent compartments 103, 105.

Thus, recirculating the generated solutions over the compartments wherein they are generated allows increasing the respective concentrations of the generated solutions. This has the further advantage that the concentration of the cleaning solutions can be controlled.

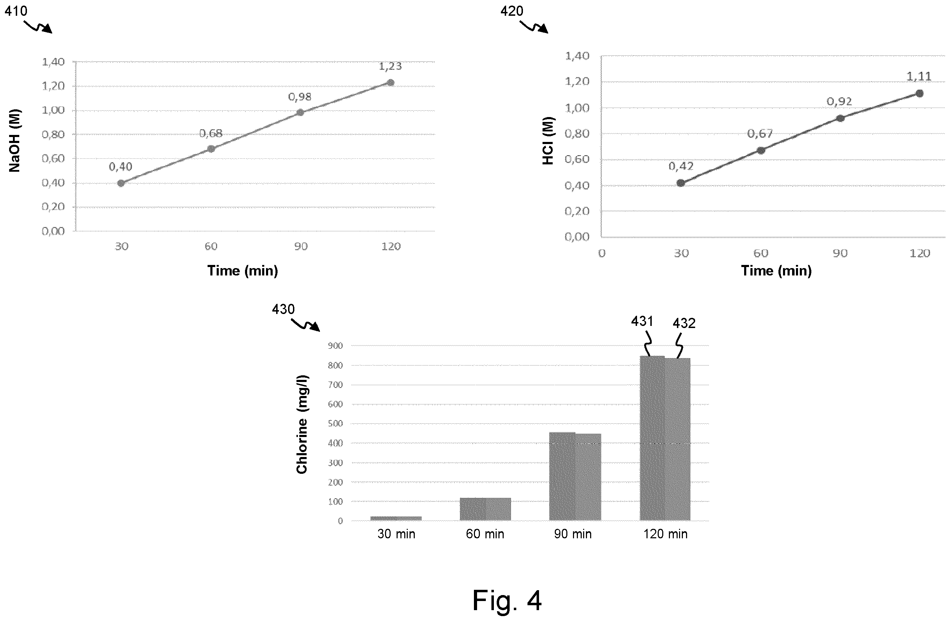

Fig. 4 shows experimental validation results of the generated cleaning solutions by a bipolar membrane electrodialysis device according to embodiments. The bipolar membrane electrodialysis device comprises a membrane stack comprising one outer cation-exchange membrane and five repeating units. The electrodes are made of titanium coated ruthenium. A current density of 300 A/m2 is applied to the electrodes. The membranes have a surface of 10 cm x 10 cm. Sodium chloride dissolved in demineralised water at a concentration of 1.0 M is used as the chloride salt solution feed provided to the anode compartment and the intermediate compartment between the anion-exchange membrane and the cation-exchange membrane of the repeating unit. The generated solutions are recirculated over the respective compartments as illustrated in Fig. 3 at a recirculation flow velocity of 5 cm/s.

Fig. 4 shows the concentration 410 of the generated sodium hydroxide solution, the concentration of the generated hydrochloric acid solution 420, and the generation of free chlorine 430. The concentration of generated sodium hydroxide solution and hydrochloric acid solution is obtained by performing titrations every 30 minutes. The generated sodium hydroxide solution reached a concentration of 1.23M and has a purity of 95.1% after recirculating the solutions for 120 minutes. The generated hydrochloric acid solution reached a concentration of 1.11M and has a purity of 96.6% after recirculating the solutions for 120 minutes. Around 800 mg/l of free chlorine 431 has been generated after recirculating the solutions for 120 minutes. Thus, the bipolar membrane electrodialysis device allows generating a variety of cleaning solutions for chemical cleaning.

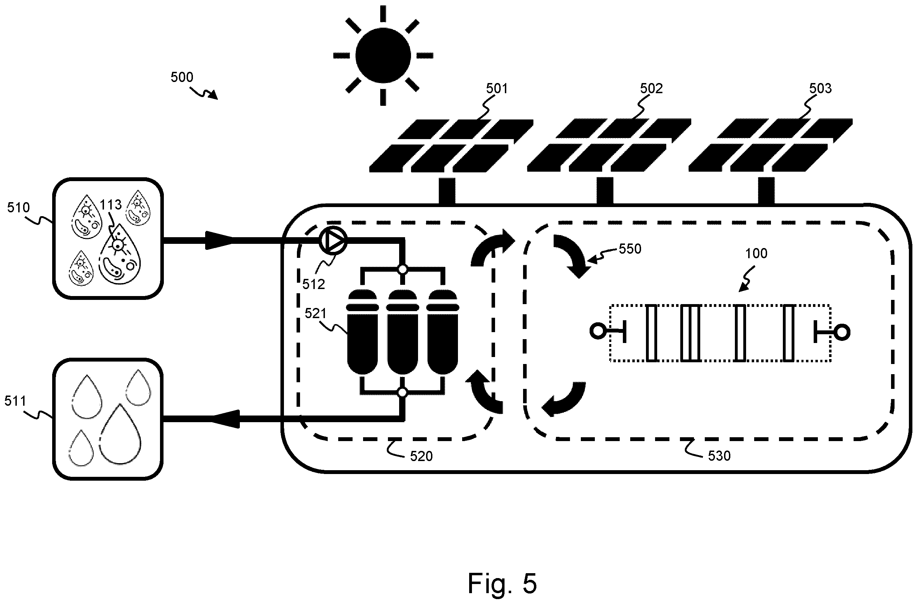

Fig. 5 shows an example of a decentralized water treatment unit 500 for purifying untreated water 510 to purified water 511 for human consumption. Decentralized water treatment units are commonly located in remote areas, rural areas, or developing countries where access to both a centralized water distribution system and/or centralized energy grid are often not present. The system 500 may be grid-independent, relying on renewable energy sources such as solar panels 501, 502, 503; hydropower; and wind turbines. The system 500 may further house energy storage systems such as batteries. The size and purifying capacity of a decentralized water treatment unit is limited compared to industrial water treatment systems.

The decentralized water treatment unit 500 may comprise a filtration module 520, which has one or more filtration membranes 521. By the filtration membrane, the untreated water 510 may be purified by size exclusion during a filtration cycle. By a pump 512, untreated water 510 may be forced through the filtration membrane 521 whereby contaminants 513 physically larger than the membrane pores are retained. Depending on the contaminants 513 and the nature of the untreated water 510, the filtration membranes 521 may for example be any of a microfiltration membrane, having a pore size of about 10 $\mu$m to about 0.01 $\mu$m; an ultrafiltration membrane, having a pore size of about 0.01 $\mu$m to about 0.001 $\mu$m; a nanofiltration membrane, having a pore size of about 0.001 $\mu$m to about 0.0001 $\mu$m; or a reverse osmosis membrane, having a pore size of at most about 0.0001

μm. The untreated water 510 may further be pumped through a plurality of filtration membranes 521 either connected in sequence, in parallel, or a combination thereof.

The decentralized water treatment unit 500 may further comprise a cleaning module 530 for chemically cleaning the filtration module 520. To this end, module 530 may comprise the bipolar membrane electrodialysis device 100 according to embodiments. The bipolar membrane electrodialysis device 100 is configured to generate a hydrochloric acid solution, an alkali hydroxide solution, and free chlorine. These components may further be combined to generate other cleaning solutions such as, for example, a sodium hypochlorite solution. Device 100 thus allows generating the different cleaning solutions needed for chemically cleaning the filtration membranes 521 in a single device starting from benign starting solutions. This generation is only initiated when the cleaning solutions are needed, i.e. when cleaning of the filters 521 has to be performed. This avoids the handling and storing of dangerous concentrated chemicals, as the cleaning solutions are only generated momentarily before use, i.e., when cleaning is required.

The generated cleaning solutions may for example depend on the type of filtration membranes 521, the type of fouling that has saturated the filtration membranes 521, the recommendations of the filtration membrane's manufacturer, or the desired lifetime of the filtration membrane 521. Additionally, it makes the cleaning module 130 modular, as it can produce a variety of cleaning solutions 132 to optimally clean the different types of filtration membranes 521 used in a decentralized water treatment unit 500.

The filtration membranes 521 may then be chemically cleaned by pumping 550 the generated cleaning solutions through the filtration membranes 521. By the chemical cleaning, the filtration capacity of the filtration membranes 521 is restored to its clean level, i.e., the initial flow rate of the purified water 511 generated by the decentralized water treatment unit 500 is restored.

The bipolar membrane electrodialysis device 100 according to embodiments may also be used in water treatment units that purify water by means of filtration membranes on an industrial scale, e.g. in drinking water production plants, wastewater treatment facilities, the food and beverage industry, chemical process plants, textile industry, or the pulp and paper industry. The bipolar membrane electrodialysis device 100 can be particularly advantageous in water treatment units that use a combination of filtration membranes requiring cleaning without free chlorine, e.g. reverse osmosis membranes, and filtration membranes requiring cleaning with free chlorine, e.g. microfiltration membranes, ultrafiltration membranes, and nanofiltration membranes.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A bipolar membrane electrodialysis device (100) for generating a hydrochloric acid solution (133), an alkali hydroxide solution (132, 134), and free chlorine (131) from a chloride salt solution feed (135, 138) and a water feed (136, 137, 139); the bipolar membrane electrodialysis device comprising:

   - an anode compartment (101) comprising an anode (106);
   - a cathode compartment (105) comprising a cathode (107); and
   - intermediate compartments (102 - 104) separated by a stack of membranes (110, 121, 122, 123) arranged in series between the anode compartment and the cathode compartment; wherein the stack of membranes comprises an outer cation-exchange membrane (110), and one or more repeating units (120) respectively comprising a sequence of a bipolar membrane (121), an anion-exchange membrane (122), and a cation-exchange membrane (123);

and wherein the bipolar membrane electrodialysis device is configured to:

- receive the chloride salt solution feed (135, 138) within the anode compartment (101) and within the intermediate compartment (104) between the anion-exchange membrane and the cation-exchange membrane of the one or more repeating units (120); and
- receive the water feed (136, 137, 139) within the other intermediate compartments (102, 103) and the cathode compartment (105).

2. The bipolar membrane electrodialysis device according to claim 1, further configured to generate the hydrochloric acid solution (133) within the intermediate compartment (103) between the bipolar membrane (121) and the anion-exchange membrane (122) of the one or more repeating units (120) when subject to an electric field between the anode (106) and the cathode (107).

3. The bipolar membrane electrodialysis device according to any of the preceding claims, further configured to, when subject to an electric field between the anode (106) and the cathode (107):

- generate the alkali hydroxide solution (132, 134) within the intermediate compartment (102) between the outer cation-exchange membrane (110) and the bipolar membrane (121);
- generate the alkali hydroxide solution (132, 134) within the cathode compartment (105); and
- if the bipolar membrane electrodialysis device comprises at least two repeating units (120), generate the alkali hydroxide solution (132, 134) within the intermediate compartment between the respective repeating units.

4. The bipolar membrane electrodialysis device according to any of the preceding claims, further configured to generate the free chlorine (131) within the anode compartment (101) when subject to an electric field between the anode (106) and the cathode (107).

5. The bipolar membrane electrodialysis device according to any of claims 2-4, further configured to recirculate a solution generated within a compartment over said compartment until the generated solution has a desired concentration.

6. The bipolar membrane electrodialysis device according to claim 4, further configured to extract the generated free chlorine (131) from the anode compartment (101) as a chlorine gas.

7. The bipolar membrane electrodialysis device according to claim 3 and 5, further configured to generate an alkali hypochlorite solution by dissolving the chlorine gas within a water stream comprising at least a portion of the generated alkali hydroxide solution (132, 134).

8. The bipolar membrane electrodialysis device according to claim 4, further configured to extract the generated free chlorine (131) from the anode compartment (101) as a liquid free chlorine solution.

9. The bipolar membrane electrodialysis device according to claim 3 and 7, further configured to generate an alkali hypochlorite solution by mixing the liquid free chloride solution with at least a portion of the generated alkali hydroxide solution (132, 134).

10. The bipolar membrane electrodialysis device according to any of the preceding claims, wherein the outer cation-exchange membrane (110) is resistant to free chlorine.

11. The bipolar membrane electrodialysis device according to any of the preceding claims, wherein the chloride salt solution feed (135, 138) is a saturated brine solution, a diluted chloride salt solution, seawater, or a reverse osmosis concentrate.

12. The bipolar membrane electrodialysis device (200) according to any of the preceding claims, further reconfigurable to generate the hydrochloric acid solution and the alkali hydroxide solution without generating free chlorine by receiving a feed substantially free of chloride (210, 140) within the anode compartment (101) instead of the chloride salt solution feed (135).

13. The bipolar membrane electrodialysis device (200) according to claim 12, wherein the feed substantially free of chloride (210, 140) comprises a recirculated feed (210) of the generated alkali hydroxide solution (201, 202).

14. A process for generating a hydrochloric acid solution (133), an alkali hydroxide solution (132, 134), and free chlorine (131) from a chloride salt solution feed (135, 138) and a water feed (136, 137, 139); the process comprising:

- applying an electrical field between an anode (106) within an anode compartment (101) and a cathode (107) within a cathode compartment (105);
- feeding the chloride salt solution feed (135, 138) within the anode compartment (101);
- feeding the chloride salt solution feed (135, 138) within an intermediate compartment (104) between an anion-exchange membrane (122) and a cation-exchange membrane (123) of one or more repeating units (120); and
- feeding the water feed (136, 137, 139) within other intermediate compartments and the cathode compartment (105);

wherein the intermediate compartments are separated by a stack of membranes (110, 121, 122, 123) arranged in series between the anode compartment and the cathode compartment; and wherein the stack of membranes comprises an outer cation-exchange membrane (110), and one or more repeating units (120) respectively comprising a sequence of a bipolar membrane (121), an anion-exchange membrane (122), and a cation-exchange membrane (123).

15. The process according to claim 14, further comprising feeding a feed substantially free of chloride (210, 140) within the anode compartment (101) instead of the chloride salt solution feed (135) when generation of free chlorine is undesired.

Fig. 1

EP 4 691 612 A1

Fig. 2

Fig. 3

Fig. 4

Fig. 5

Europäisches Patentamt

European Patent Office

Office européen des brevets

# EUROPEAN SEARCH REPORT

**Application Number**

EP 24 19 2995

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VECINO, X. ET AL: "Integration of Monopolar and Bipolar Electrodialysis Processes for Tartaric Acid Recovery from Residues of the Winery Industry \| ACS Sustainable Chemistry & Engineering", ACS SUSTAINABLE CHEMISTRY & ENGINEERING, [Online] vol. 8, no. 35, 8 September 2020 (2020-09-08), pages 13387-13399, XP093209905, US ISSN: 2168-0485, DOI: 10.1021/acssuschemeng.0c04166 Retrieved from the Internet: URL:https://pubs.acs.org/doi/10.1021/acssuschemeng.0c04166> [retrieved on 2024-09-30] * abstract; figure 1 * | 1-13 | INV. B01D61/44 B01D65/02 C02F1/469 C02F103/38 C02F103/08 |
| X | US 2021/229040 A1 (CASANOVA EDUARDO AURELIO [US] ET AL) 29 July 2021 (2021-07-29) * paragraph [0045]; figure 2C * | 1-13 | |
| X | US 2023/080924 A1 (THYAGARAJAN KRISHNAN [US] ET AL) 16 March 2023 (2023-03-16) * paragraph [0026] - paragraph [0030]; figure 2B * | 1-14 | TECHNICAL FIELDS SEARCHED (IPC) B01D C02F |
| X | US 4 740 281 A (CHLANDA FREDERICK P [US] ET AL) 26 April 1988 (1988-04-26) * column 5, line 32 - column 6, line 59; figure 2 * | 1-13 | |
| X | US 2018/251386 A1 (WANG HUA [US] ET AL) 6 September 2018 (2018-09-06) | 15 | |
| Y | * paragraphs [0018], [0029], [0054], [0058], [0067]; figure 1 * | 1-14 | |

-/--

The present search report has been drawn up for all claims

| Place of search | Date of completion of the search | Examiner |
|---|---|---|
| Munich | 16 January 2025 | Williams, Jennifer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 19 2995

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 3 034 689 A1 (CERAM HYD [FR]) 14 October 2016 (2016-10-14) | 1-15 | |
| Y | * page 1, line 1 - line 8 * <br> * page 4, line 25 - page 5, line 21 * <br> * page 17, line 9 - line 21 * <br> * page 21, line 22 - line 24 * <br> * page 22, line 23 * <br> * page 22, line 29 - line 31 * <br> ----- | 1-14 | |
| X | EP 0 121 611 A2 (ALLIED CORP [US]) 17 October 1984 (1984-10-17) <br> * claims 1,2,6; figure 1 * <br> ----- | 1-14 | |

TECHNICAL FIELDS
SEARCHED      (IPC)

The present search report has been drawn up for all claims

| Place of search | Date of completion of the search | Examiner |
|---|---|---|
| Munich | 16 January 2025 | Williams, Jennifer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ...........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 2995

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2025

| Patent document cited in search report | | | Publication date | Patent family member(s) | | Publication date |
|---|---|---|---|---|---|---|
| US 2021229040 | A1 | | 29-07-2021 | AR | 122838 A1 | 12-10-2022 |
| | | | | AU | 2019282721 A1 | 07-01-2021 |
| | | | | BR | 112020024684 A2 | 02-03-2021 |
| | | | | CA | 3102636 A1 | 12-12-2019 |
| | | | | CN | 112469494 A | 09-03-2021 |
| | | | | EP | 3801843 A1 | 14-04-2021 |
| | | | | US | 2021229040 A1 | 29-07-2021 |
| | | | | WO | 2019236814 A1 | 12-12-2019 |
| US 2023080924 | A1 | | 16-03-2023 | AU | 2022221436 A1 | 30-03-2023 |
| | | | | EP | 4148023 A1 | 15-03-2023 |
| | | | | JP | 2023041056 A | 23-03-2023 |
| | | | | US | 2023080924 A1 | 16-03-2023 |
| US 4740281 | A | | 26-04-1988 | AT | E66166 T1 | 15-08-1991 |
| | | | | AU | 8159587 A | 06-05-1988 |
| | | | | CA | 1324981 C | 07-12-1993 |
| | | | | CN | 87106982 A | 27-04-1988 |
| | | | | DK | 268488 A | 17-05-1988 |
| | | | | EP | 0269234 A1 | 01-06-1988 |
| | | | | EP | 0327572 A1 | 16-08-1989 |
| | | | | ES | 2030733 T3 | 16-11-1992 |
| | | | | JP | H0450052 B2 | 13-08-1992 |
| | | | | JP | H02500420 A | 15-02-1990 |
| | | | | KR | 880701577 A | 03-11-1988 |
| | | | | US | 4740281 A | 26-04-1988 |
| | | | | WO | 8802652 A1 | 21-04-1988 |
| | | | | ZA | 877724 B | 03-03-1988 |
| US 2018251386 | A1 | | 06-09-2018 | AU | 2016317119 A1 | 15-03-2018 |
| | | | | BR | 112018002671 A2 | 02-10-2018 |
| | | | | CN | 106477785 A | 08-03-2017 |
| | | | | EP | 3344582 A1 | 11-07-2018 |
| | | | | US | 2018251386 A1 | 06-09-2018 |
| | | | | WO | 2017039859 A1 | 09-03-2017 |
| FR 3034689 | A1 | | 14-10-2016 | NONE | | |
| EP 0121611 | A2 | | 17-10-1984 | CA | 1256055 A | 20-06-1989 |
| | | | | EP | 0121611 A2 | 17-10-1984 |
| | | | | JP | S6221873 B2 | 14-05-1987 |
| | | | | JP | S59182979 A | 17-10-1984 |

EPO FORM P0459

For more details about this annex : see Official Journal of the European Patent Office, No. 12/82